# EUROPEAN PATENT APPLICATION

(11) **EP 4 425 857 A1**
(43) Date of publication of application: **04.09.2024**
(21) Application number: 22954474.7
(22) Date of filing: 11.08.2022
(51) Int. Cl.: H04L 27/00

(54) **SIGNAL SENDING METHOD AND APPARATUS, SIGNAL RECEIVING METHOD AND APPARATUS, DEVICE, AND STORAGE MEDIUM**

(71) Applicant: New H3C Technologies Co., Ltd., Hangzhou, Zhejiang 310052 (CN)
(72) Inventor: KONG, Lei, Beijing 100102 (CN)
(74) Representative: IPAZ
(86) International application number: PCT/CN2022/111653
(87) International publication number: WO 2024/031504

(57) **Abstract**

A method and an apparatus for sending and receiving a signal, and an electronic device and storage medium, which relate to the technical field of communications, the method includes: a first communication party determining a DMRS port corresponding to a reference signal that needs to be sent to a second communication party in a DMRS port group, each DMRS port in the DMRS port group occupies one resource element on average, sending the reference signal through the DMRS port; the second communication party determining the DMRS port corresponding to the reference signal that needs to be sent by a first communication party in a DMRS port group, each DMRS port in the DMRS port group occupies one resource element on average, receiving the reference signal sent through the DMRS port. Through the technical solution provided by the examples of the disclosure, the CP-OFDM waveform can support the maximum number of DMRS ports to reach the number of RE included in the OFDM symbols occupied by the DMRS port group.

## Description

### Technical Field

The present disclosure relates to the technical field of communications, and in particular, to a method and an apparatus for sending and receiving a signal, electronic device and storage medium.

### Background

MIMO (Multiple Input Multiple Output) is one of key technologies of the NR (New RAT) system. In MIMO scenario, the demand for multiplexing capacity of DMRS (De-Modulation Reference Signal) for DL (Down Link) and UL (Up Link) from various use cases is increasing, which requires the CP-OFDM (Cyclic Prefix-Orthogonal Frequency Division Multiplexing) waveform to support more DMRS ports.

### Summary

The purpose of the examples of the present disclosure is to provide a method and an apparatus for sending and receiving a signal, electronic device and storage medium, so as to increase the number of DMRS ports supported by the CP-OFDM waveform. Specifically, the technical solutions are as follows:
In a first aspect, an example of the present disclosure provides a method for sending a signal, which is applied to a first communication party. The method includes:
determining a DMRS port corresponding to a reference signal that needs to be sent to a second communication party in a DMRS port group, each DMRS port in the DMRS port group occupies one resource element on average;
sending the reference signal through the DMRS port;
Wherein, the first communication party is a base station, and the second communication party is a UE (User Equipment), or, the first communication party is a UE, and the second communication party is a base station.

In a second aspect, an example of the present disclosure provides a method for receiving a signal, which is applied to a second communication party. The method includes:
determining a DMRS port corresponding to a reference signal that needs to be sent by a first communication party in a DMRS port group, each DMRS port in the DMRS port group occupies one resource element on average;
receiving the reference signal through the DMRS port;
Wherein, the first communication party is a base station, and the second communication party is a UE, or, the first communication party is a UE, and the second communication party is a base station.

In a third aspect, an example of the present disclosure provides an apparatus for sending a signal, which is applied to a first communication party. The apparatus includes:
a determination unit, for determining a DMRS port corresponding to a reference signal that needs to be sent to a second communication party in a DMRS port group, each DMRS port in the DMRS port group occupies one resource element on average;
a sending unit, for sending the reference signal through the DMRS port;
wherein, the first communication party is a base station, and the second communication party is a UE, or, the first communication party is a UE, and the second communication party is a base station.

In a fourth aspect, an example of the present disclosure provides an apparatus for receiving a signal, which is applied to a second communication party. The apparatus includes:
a determination unit, for determining a DMRS port corresponding to a reference signal that needs to be sent by a first communication party in a DMRS port group, each DMRS port in the DMRS port group occupies one resource element on average;
a receiving unit, for receiving the reference signal through the DMRS port;
wherein, the first communication party is a base station, and the second communication party is a UE, or, the first communication party is a UE, and the second communication party is a base station.

In a fifth aspect, an example of the present disclosure provides an electronic device, including a processor and a machine-readable storage medium, where the machine-readable storage medium stores machine-executable instructions that can be executed by a processor, cause the processor to: implement any of the method provided in the first aspect, or implement any of the method provided in the second aspect.

In a sixth aspect, an example of the present disclosure provides a computer-readable storage medium having computer programs stored thereon, which when executed by a processor, cause the processor to implement any of the method provided in the first aspect, or implement any of the method provided in the second aspect.

In a seventh aspect, an example of the present disclosure provides a computer program which, when executed by a processor, causes the processor to implement any of the method provided in the first aspect, or implement any of the method provided in the second aspect.

In the technical solutions provided by the examples of the present disclosure, when receiving or sending a reference signal, the first communication party uses the corresponding DMRS port in the DMRS port group to send the reference signal to the second communication party, and each DMRS port in the DMRS port group occupies one RE (Resource Element) on average, so that the CP-OFDM waveform can support the maximum number of DMRS ports up to the number of REs included in the OFDM symbols occupied by the DMRS port group.

It should be understood that any product or method for implementing the examples of the present disclosure does not necessarily require all of the advantages described above.

### Brief Description of the Drawings

In order to more clearly describe the technical solution of the examples of the disclosure and the prior art, drawings needed in the examples and the prior art will be briefly described below. Obviously, the drawings described below are for only some examples of the present disclosure, one of ordinary skills in the art can also obtain other examples based on these drawings without any creative efforts.
FIG. 1 is a first schematic diagram of OFDM symbols occupied by a DMRS port group in the related art;
FIG. 2 is a second schematic diagram of OFDM symbols occupied by a DMRS port group in the related art;
FIG. 3 is a schematic flow chart of a method for sending a signal according to an example of the present disclosure;
FIG. 4 is a schematic diagram of a single OFDM symbol according to an example of the present disclosure;
FIG. 5 is a first schematic diagram of dual OFDM symbols according to an example of the present disclosure;
FIG. 6 is a second schematic diagram of dual OFDM symbols according to an example of the present disclosure;
FIG. 7 is a third schematic diagram of dual OFDM symbols according to an example of the present disclosure;
FIG. 8 is a fourth schematic diagram of dual OFDM symbols according to an example of the present disclosure;
FIG. 9 is a schematic diagram of frequency domain offsets corresponding to "a" in FIG. 5, "a" in FIG. 6, and "a" in FIG. 7;
FIG. 10 is a fifth schematic diagram of dual OFDM symbols according to an example of the present disclosure;
FIG. 11 is a schematic diagram of a DMRS port group implemented by a front-loaded DMRS and an additional DMRS according to an example of the present disclosure;
FIG. 12 is a schematic diagram of a DMRS port group implemented by a front-loaded DMRS according to an example of the present disclosure;
FIG. 13 is a schematic diagram of a DMRS port group implemented by an additional DMRS according to an example of the present disclosure;
FIG. 14 is a schematic diagram of symbols occupied by DMRS port groups implemented by continuous time slots according to an example of the present disclosure;
FIG. 15 is a schematic diagram of symbols occupied by DMRS port groups implemented across time slots according to an example of the present disclosure;
FIG. 16 is a first schematic flow chart of a method for receiving a signal according to an example of the present disclosure;
FIG. 17 is a second schematic flow chart of a method for receiving a signal according to an example of the present disclosure;
FIG. 18 is a schematic structural diagram of an apparatus for sending a signal according to an example of the present disclosure;
FIG. 19 is a first schematic structural diagram of an apparatus for receiving a signal according to an example of the present disclosure;
FIG. 20 is a second schematic structural diagram of an apparatus for receiving a signal according to an example of the present disclosure;
FIG. 21 is a schematic structural diagram of an electronic device according to an example of the present disclosure.

### Detailed Description

The technical solution of the disclosure will be described in detail with reference to the drawings of examples of the present disclosure. Obviously, the examples described are only some instead of all of the examples of the present disclosure. All other examples obtained by those of ordinary skills in the art based on the examples herein are within the scope of the present disclosure.

The terms appearing in the examples of the present disclosure will be explained below.

DMRS is used for channel estimation and demodulation of uplink and downlink reference signals.

A DMRS port group occupies one or more OFDM symbols, the DMRS port group includes multiple DMRS ports and/or CDM (Code Division Multiplexing) groups, and one CDM group includes multiple DMRS ports. DMRS ports in the same CDM group cannot be distinguished by time domain or frequency domain, but can only be distinguished by code domain.

The symbols described in the examples of the present disclosure are OFDM symbols, and one OFDM symbol includes 12 REs (Resource Element).

MIMO is one of the key technologies of the NR system. In 3GPP (3rd Generation Partnership Project) Rel (Release)-15/16/17, MIMO-related characteristics are studied and standardized for FDD (Frequency Division Duplex) and TDD (Time Division Duplex) systems, the main content of which is: for DL MIMO operation. In Rel-18, the main content is: to identify and standardize the necessary enhancements of UL MIMO, and also introduce the necessary enhancements of DL MIMO to meet the NR deployment evolution requirements, so as to facilitate the use of large antenna arrays applicable to FR1 (Frequency Range 1) and FR2 (Frequency Range 2). The necessary enhancements for UL MIMO and DL MIMO described above relate to the following MIMO enhancement field:
The demand for reuse capacity of DL and UL DMRS from various use cases is increasing, so the number of orthogonal ports for transmitting DMRS needs to be increased. Wherein, the orthogonal port used for transmitting the DMRS is the DMRS port mentioned in the example of the present disclosure.

The technical solution provided by the examples of the present disclosure is designed for the above-mentioned solutions, and the solution is to increase the number of DMRS ports supported by the CP-OFDM waveform.

At present, from the perspective of standardization, 3GPP Rel-15/16/17 supports up to 12 DMRS ports for the CP-OFDM waveform, which cannot be directly extended to the case of more than 12 DMRS ports. Specifically, the DMRS in the existing standard is divided into a DMRS configuration type (configuration type) 1 and a DMRS configuration type 2.

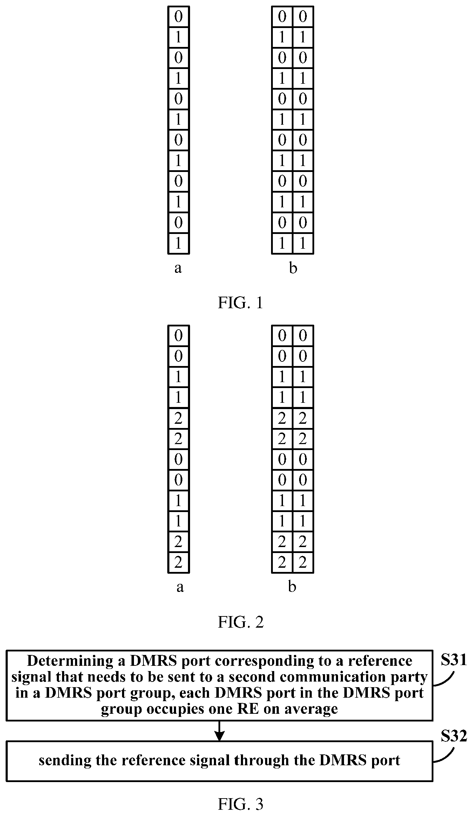

For DMRS configuration type 1, a DMRS port group occupying one OFDM symbol can support 4 orthogonal DMRS ports, as shown in "a" in FIG. 1; a DMRS port group occupying two OFDM symbols can support up to 8 orthogonal DMRS ports, as shown in "b" in FIG. 1. In "a" and "b" in FIG. 1, one rectangular box represents one RE, and one column of rectangular boxes represents one OFDM symbol.

As shown in "a" in FIG. 1, the rectangular box of number "0" represents the REs occupied by one CDM group, and this CDM group includes a DMRS port "0" and a DMRS port "1"; the rectangular box of number "1" represents the REs occupied by one CDM group, this CDM group includes a DMRS port "2" and a DMRS port "3". It can be seen that in the case where the DMRS port group occupies one OFDM symbol, that is, in the case of a single OFDM symbol, it supports up to four DMRS ports.

As shown in "b" in FIG. 1, the rectangular box of number "0" represents the REs occupied by one CDM group, and the CDM group includes a DMRS port "0", a DMRS port "1", a DMRS port "4" and a DMRS port "5"; the rectangular box of number "1" represents the REs occupied by one CDM group, the CDM group includes a DMRS port "2", a DMRS port "3", a DMRS port "6"and a DMRS port "7". It can be seen that in the case where the DMRS port group occupies two OFDM symbols, that is, in the case of dual OFDM symbols, it supports up to eight DMRS ports.

Based on a and b in FIG. 1, for DMRS configuration type 1, it supports up to 8 DMRS ports, and each DMRS port occupies 3RE/RB (Resource Block) on average.

For DMRS configuration type 2, a single OFDM symbol can support up to 6 orthogonal DMRS ports, as shown in a in FIG. 2; dual OFDM symbols can support up to 12 orthogonal DMRS ports, as shown in "b" in FIG. 2 . As shown in "a" and "b" in FIG. 2, one rectangular box represents one RE, and one column of rectangular boxes represents one OFDM symbol.

As shown in "a" in FIG. 2, the rectangular box of number "0" represents the REs occupied by one CDM group, and this CDM group includes a DMRS port "0" and a DMRS port "1"; the rectangular box of number "1" represents the REs occupied by one CDM group, this CDM group includes a DMRS port "2" and a DMRS port "3"; the rectangular box of number "2" is one CDM group, the CDM group includes a DMRS port "4" and a DMRS port "5". It can be seen that in the case of a single OFDM symbol, it supports up to 6 DMRS ports.

As shown in "b" in FIG. 2, the rectangular box of number "0" represents the REs occupied by one CDM group, and the CDM group includes a DMRS port "0", a DMRS port "1", a DMRS port "6" and a DMRS port "7"; the rectangular box of number "1" represents the REs occupied by one CDM group, the CDM group includes a DMRS port "2", a DMRS port "3", a DMRS port "8" and a DMRS port "9"; the rectangular box of number "2" is one CDM group, the CDM group includes a DMRS port "4", a DMRS port "5", a DMRS port "10", and a DMRS port "11". It can be seen that in the case of dual OFDM symbols, it supports up to 12 DMRS ports.

Based on "a" and "b" in FIG. 2, for DMRS configuration type 2, it supports up to 12 DMRS ports, and each DMRS port occupies 2RE/RB on average.

As mentioned above, from the perspective of standardization, 3GPP Rel-15/16/17 currently only supports up to 12 orthogonal DMRS ports, and cannot be directly extended to more orthogonal DMRS ports, so it is necessary to redesign how to support more orthogonal DMRS ports.

Based on this, the examples of the present disclosure provide a method for sending a signal and method for receiving a signal, a first communication party uses a corresponding DMRS port in the DMRS port group to send a reference signal to a second communication party, and each DMRS port in the DMRS port group occupies one RE on average, so that the CP-OFDM waveform can support the maximum number of DMRS ports up to the number of REs included in the OFDM symbols occupied by the DMRS port group.

The method for sending a signal and the method for receiving a signal provided by the examples of the present disclosure will be described in detail below through specific examples.

Referring to FIG. 3, FIG. 3 is a schematic flow chart of a method for sending a signal according to an example of the present disclosure. The method can be applied to a first communication party, the first communication party can be a base station or a UE, when the first communication party is the base station, the second communication party is the UE, and when the first communication party is the UE, the second communication party is the base station. In this example of the present disclosure, the UE may be an advanced UE such as a CPE (Customer Premise Equipment), a FWA (Fixed Wireless Access), a vehicle, and an industrial equipment. The above method for sending a signal includes the following blocks.

Block S31, determining a DMRS port corresponding to a reference signal that needs to be sent to a second communication party in a DMRS port group, each DMRS port in the DMRS port group occupies one RE on average.

Block S32, sending the reference signal through the DMRS port.

In the technical solutions provided by the examples of the present disclosure, when sending a reference signal, the first communication party uses the corresponding DMRS port in the DMRS port group to send the reference signal to the second communication party, and each DMRS port in the DMRS port group occupies one RE on average, so that the CP-OFDM waveform can support the maximum number of DMRS ports up to the number of REs included in the OFDM symbols occupied by the DMRS port group.

In this example of the present disclosure, the base station may preset the number of symbols occupied by the DMRS port group, the symbols occupied by the DMRS port group, DMRS ports and CDM groups included in the DMRS port group, and serial number of each of DMRS ports, serial number of each of DMRS ports included in the CDM group, etc.

Each of DMRS ports in the DMRS port group is orthogonal in the time domain, frequency domain or code domain. The DMRS includes a front-loaded DMRS and an additional DMRS, and the DMRS port group in the example of the present disclosure can be used as a front-loaded DMRS port or an additional DMRS port, that is, the DMRS port can be located at either a front-loaded symbol position or an additional symbol position. The number of front-loaded symbols can be set according to the actual needs. For example, the number of front-loaded symbols is 3, that is, the first three symbols are front-loaded symbols, and the additional symbols are symbols at any position after the front-loaded symbols. The additional DMRS port is used in medium/high-speed scenarios, which can meet the estimation accuracy of channel time-varying. The additional DMRS port is only a copy of the front-loaded DMRS port, that is, the additional DMRS port and the front-loaded DMRS port must be consistent in the number of DMRS ports, the sequence, the number of occupied OFDM symbols, and OCC (Orthogonal Cover Code). Therefore, in the case that the front-loaded DMRS is designed, there is no need to specially design the additional DMRS.

The following DMRS port group design takes the front-loaded DMRS port as an example.

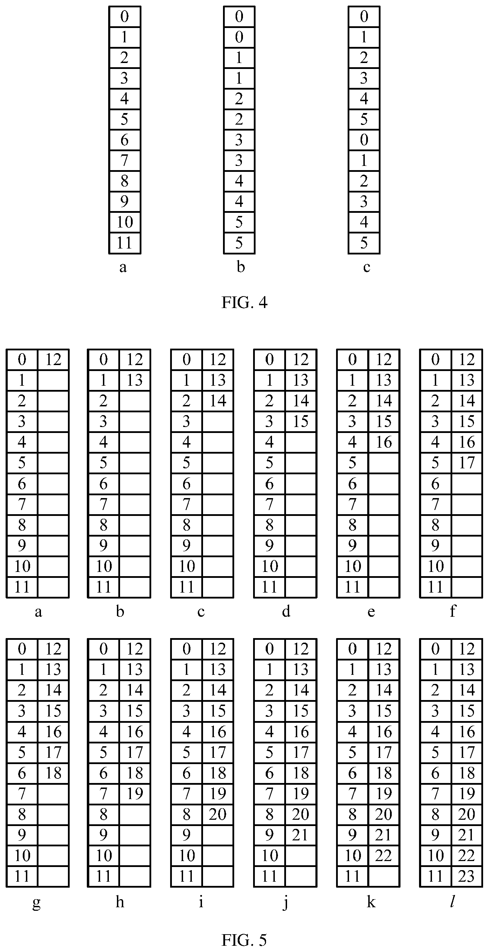

In some examples, the number of symbols occupied by the DMRS port group is 1, that is, one OFDM symbol occupied by the DMRS port group, that is, a single OFDM symbol. In this case, when there is no CDM group in the DMRS port group, each DMRS port included in the DMRS port group may occupy one RE in a frequency division multiplexing manner, as shown in a in FIG. 4. As shown in "a" in FIG. 4, one rectangular box represents one RE, and one column of rectangular boxes represents one symbol. As shown in "a" in FIG. 4, the rectangular boxes of numbers 0-11 respectively represent REs occupied by one DMRS port. As shown in "a" in FIG. 4, the serial number of the DMRS port corresponding to the rectangular box of each number can be set according to actual requirements.

For example, the serial number of the DMRS port corresponding to the rectangular box of each number can be set in sequence, for example, the serial number of the DMRS port corresponding to the rectangular box of number "0" is 0, the serial number of the DMRS port corresponding to the rectangular box of number "1" is 1, the serial number of the DMRS port corresponding to the rectangular box of number "2" is 3, and so on.

The serial number of the DMRS port corresponding to the rectangular box of each number can be set at intervals of specified values, for example, the specified value is 2, the serial number of the DMRS port corresponding to the rectangular box of number "0" is 0, the serial number of the DMRS port corresponding to the rectangular box of number "1" is 2, the serial number of the DMRS port corresponding to the rectangular box of number "2" is 4, and so on.

Based on "a" in FIG. 4, in the case of a single OFDM symbol, the example of the present disclosure supports up to 12 DMRS ports. This will not increase the overhead of the DMRS in Rel-15/16/17, keeping the front-loaded DMRS also occupying only one OFDM symbol, and at the same time the number of DMRS ports supported in the case of a single OFDM symbol is increased.

In some examples, the number of symbols occupied by the DMRS port group is 1, that is, one OFDM symbol occupied by the DMRS port group, that is, a single OFDM symbol. In this case, when there are CDM groups in the DMRS port group, and each CDM group includes a first preset number of DMRS ports, each CDM group included in the DMRS port group occupies a first preset number of REs according to the frequency domain CDM manner of a first preset length, the value of the first preset number is the same as the value of the first preset length, and the value of the first preset number is greater than or equal to 2.

Taking the value of the first preset number as 2 as an example, each CDM group includes 2 DMRS ports, according to the frequency domain CDM manner with a length of 2, the number of symbols occupied by the DMRS port group is 1, each CDM group included in the DMRS port group occupies 2 REs, as shown in "b" in FIG. 4. As shown in "b" in FIG. 4, one rectangular box represents one RE, and one column of rectangular boxes represents one symbol. As shown in "b" in FIG. 4, the rectangular boxes of numbers 0-5 respectively represent REs occupied by one CDM group. As shown in "b" in FIG. 4, the serial number of the DMRS port included in each CDM group can be set according to actual requirements.

For example, the serial number of the DMRS port included in each CDM group may be set in sequence. In the CDM group corresponding to the rectangular box with the number 0, the serial numbers of the DMRS ports are 0 and 1, in the CDM group corresponding to the rectangular box of the number "1", the serial numbers of the DMRS ports are 2 and 3, and the serial numbers of the DMRS ports corresponding to the rectangular box of the number "3" are 4 and 5, and so on.

In the CDM group corresponding to the rectangular box of each number, the serial number of the DMRS port can be set at intervals of specified values, for example, the specified value is 2, in the CDM group corresponding to the rectangular box of number "0", the serial numbers of the DMRS ports are 0 and 2, in the CDM group corresponding to the rectangular box of number "1", the serial numbers of the DMRS ports are 4 and 6, the serial numbers of the DMRS ports corresponding to the rectangular box of number "3" are 8 and 10, and so on.

In this example of the present disclosure, the first preset number of REs occupied by each CDM group may be adjacent, as shown in "b" in FIG. 4. The first preset number of REs occupied by each CDM group may also be non-adjacent, as shown in the schematic diagram the DMRS port group occupying OFDM symbols when the first preset number is 2 in "c" in FIG. 4. As shown in "c" in FIG. 4, one rectangular box represents one RE, and one column of rectangular boxes represents one symbol. As shown in "c" in FIG. 4, rectangular boxes with numbers 0-5 represent REs occupied by one CDM group, and multiple rectangular boxes with the same number correspond to one CDM group. As shown in "c" in FIG. 4, the serial numbers of DMRS ports included in each CDM group can be set according to actual requirements, which can specifically refer to the relevant description of part "b" in FIG. 4.

Based on "b" and "c" in FIG. 4, it can be seen that in the case of a single OFDM symbol, the example of the present disclosure supports up to 12 DMRS ports, which does not increase the overhead of DMRS in Rel-15/16/17, and keeping the front-loaded DMRS also only occupies one OFDM symbol, and the number of DMRS ports supported in the case of a single OFDM symbol is increased.

In some examples, the number of symbols occupied by the DMRS port group is a preset value, which is greater than or equal to 2, that is, multiple OFDM symbols occupied by the DMRS port group, that is, multiple OFDM symbols. In this case, when there is no CDM group in the DMRS port group, each DMRS port included in the DMRS port group may occupy one RE in a frequency division multiplexing manner and time division multiplexing manner.

Taking the preset value of 2 as an example. At this time, the DMRS port group occupies 2 OFDM symbols, that is, dual OFDM symbols, and the 2 OFDM symbols include 24 REs. According to the frequency division multiplexing manner and the time division multiplexing manner, each DMRS port included in the DMRS port group occupies one RE, in this case, it can support 13, 14, ..., 24 DMRS ports, as shown in the schematic diagram of DMRS port group occupying OFDM symbols shown in "a-1" in FIG. 5. As shown in "a-1" in FIG. 5, one rectangular box represents one RE, and one column of rectangular boxes represents one symbol. As shown in "a-l" in FIG. 5, the rectangular boxes of numbers 0-23 respectively represent REs occupied by one DMRS port, and the rectangular boxes without numbers are REs that are not occupied. As shown in "a-l" in FIG. 5, the serial number of the DMRS port corresponding to the rectangular box of each number can be set according to actual requirements. For example, the serial number of the DMRS port corresponding to the rectangular box of each number can be set in sequence, or can be set at intervals of specified values.

Based on "a-l" in FIG. 5, it can be seen that in the case of dual OFDM symbols, the example of the present disclosure supports up to 24 DMRS ports, which does not increase the overhead of DMRS in Rel-15/16/17, and keeping the front-loaded DMRS also only occupies two OFDM symbol, and the number of DMRS ports supported in the case of dual OFDM symbols is increased.

In some examples, the number of symbols occupied by the DMRS port group is a preset value, which is greater than or equal to 2, that is, multiple OFDM symbols occupied by the DMRS port group, that is, multiple OFDM symbols. In this case, when both DMRS ports that do not belong to the CDM group and CDM groups exist in the DMRS port group, each CDM group includes a preset number of DMRS ports, and each DMRS port included in the DMRS port group except the CDM group occupies one RE in the frequency division multiplexing manner and time division multiplexing manner; each CDM group included in the DMRS port group occupies resource elements of the preset value of in the frequency division multiplexing manner and time domain CDM manner with a length of the preset value, each CDM group includes DMRS ports of the preset value .

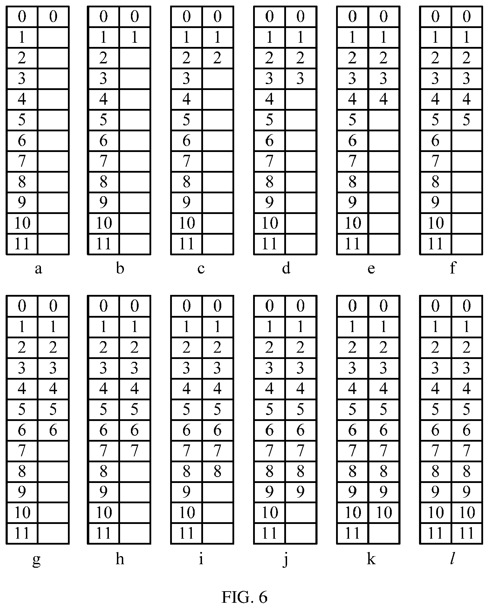

Taking the preset value of 2 as an example. At this time, the DMRS port group occupies 2 OFDM symbols, that is, dual OFDM symbols, 2 OFDM symbols include 24 REs, and each CDM group includes 2 DMRS ports. According to the frequency division multiplexing manner and the time division multiplexing manner, each DMRS port except the CDM group, that is, each independent DMRS port occupies one RE, as shown in "a" in FIG. 6, DMRS ports 1, 2, ... , 11, etc.; according to the frequency division multiplexing manner and the time domain CDM manner with a length of 2, each CDM group occupies 2 REs, as shown in "b" in FIG. 6, CDM group 0 and CDM group 1, etc. In this case, 13, 14,..., 24 DMRS ports can be supported, as shown in the schematic diagram of DMRS port groups occupying OFDM symbols in "a-l" in FIG. 6. As shown in "a-l" in FIG. 6, one rectangular box represents one RE, and one column of rectangular boxes represents one symbol. As shown in "a-l" in FIG. 6, the rectangular boxes of numbers 0-11 respectively represent REs occupied by one DMRS port or the CDM group, and the rectangular boxes without numbers are REs that are not occupied, multiple rectangular boxes with the same number correspond to one CDM group. As shown in "a-l" in FIG. 6, the serial number of the DMRS port corresponding to the rectangular box of each number can be set according to actual requirements, and the serial number of the DMRS port in the CDM group corresponding to the rectangular box of each number can be set according to actual requirements. For example, the serial number of the DMRS port corresponding to the rectangular box of each number can be set in sequence, or can be set at intervals of specified values. The serial number of the DMRS port in the CDM group corresponding to the rectangular box of each number can be set in sequence, or can be set at intervals of specified values.

Based on "a-l" in FIG. 6, it can be seen that in the case of dual OFDM symbols, the example of the present disclosure supports up to 24 DMRS ports, which does not increase the overhead of DMRS in Rel-15/16/17, and keeping the front-loaded DMRS also only occupies two OFDM symbol, and the number of DMRS ports supported in the case of dual OFDM symbols is increased.

In some examples, the number of symbols occupied by the DMRS port group is a preset value, which is greater than or equal to 2, that is, multiple OFDM symbols occupied by the DMRS port group, that is, multiple OFDM symbols. In this case, when there is no DMRS port that does not belong to the CDM group in the DMRS port group, and there is only CDM groups, each CDM group includes a second preset number of DMRS ports, and each CDM group included in each DMRS port included in the DMRS port group occupies a second preset number of REs according to the frequency domain CDM manner of the second preset length and the time domain CDM manner with the length of a preset value, and the value of the second preset number is greater than or equal to the value of the second preset length, and is less than or equal to the value of the second preset length multiplied by the preset value.

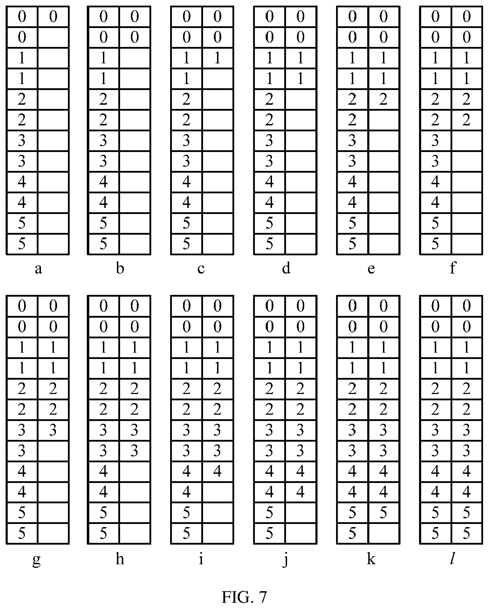

Taking the preset value as 2 and the second preset length as 2 as an example. The second preset number is greater than or equal to 2 and less than or equal to 4. At this time, the DMRS port group occupies 2 OFDM symbols, that is, dual OFDM symbols, 2 OFDM symbols include 24 REs, and each CDM group includes 2 DMRS ports. According to the frequency domain CDM manner with a length of 2 and the time domain CDM manner with a length of 2, each CDM group occupies 2-4 REs. In this case, 13, 14,..., 24 DMRS ports can be supported, as shown in the schematic diagram of DMRS port groups occupying OFDM symbols in "a-l" in FIG. 7. As shown in "a-l" in FIG. 7, one rectangular box represents one RE, and one column of rectangular boxes represents one symbol. As shown in "a-l" in FIG. 7, the rectangular boxes of numbers 0-5 respectively represent REs occupied by one CDM group, and the rectangular boxes without numbers are REs that are not occupied, multiple rectangular boxes with the same number correspond to one CDM group. As shown in "a-l" in FIG. 7, the serial number of the DMRS port in the CDM group corresponding to the rectangular box of each number can be set according to actual requirements. For example, the serial number of the DMRS port in the CDM group corresponding to the rectangular box of each number can be set in sequence, or can be set at intervals of specified values.

Based on "a-l" in FIG. 7, it can be seen that in the case of dual OFDM symbols, the example of the present disclosure supports up to 24 DMRS ports, which does not increase the overhead of DMRS in Rel-15/16/17, and keeping the front-loaded DMRS also only occupies two OFDM symbol, and the number of DMRS ports supported in the case of dual OFDM symbols is increased.

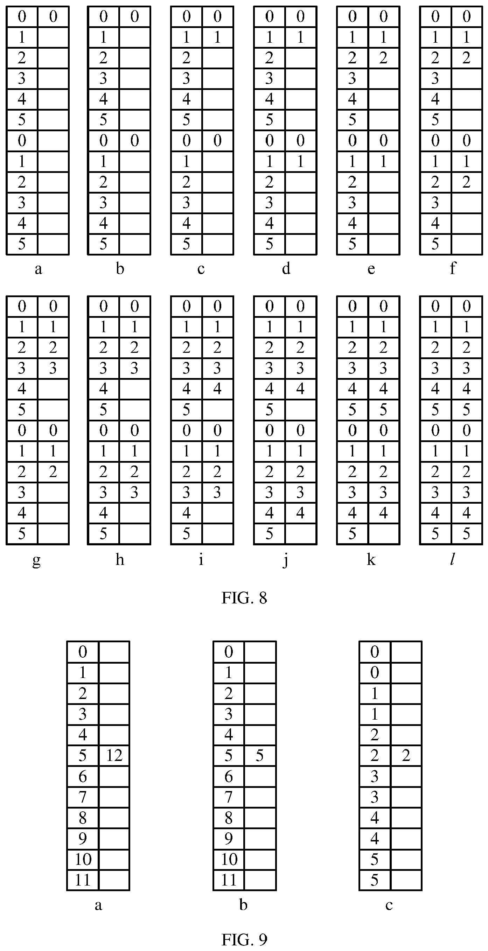

In this example of the present disclosure, multiple REs occupied by each CDM group on each symbol may be adjacent, as shown in "a-l" in FIG. 7. The multiple REs occupied by each CDM group on each symbol may also be non-adjacent, as shown in the schematic diagram of DMRS port groups occupying OFDM symbols in "a-l" in FIG. 8. As shown in "a-l" in FIG. 8, one rectangular box represents one RE, and one column of rectangular boxes represents one symbol. As shown in "a-l" in FIG. 8, rectangular boxes with numbers 0-5 represent RE occupied by one CDM group, and multiple rectangular boxes with the same number correspond to one CDM group. As shown in "a-l" in FIG. 8, the serial numbers of DMRS ports included in each CDM group can be set according to actual requirements, which can specifically refer to the relevant description of part "a-l" in FIG. 7.

In some examples, for a target symbol among all symbols occupied by the DMRS port group, the occupied resource element is offset by a preset offset relative to a starting position of the target symbol, and the target symbol is a symbol that has a resource element not occupied by a DMRS port included in the DMRS port group. The preset offset represents the number of REs offset in the frequency domain, the preset offset size can be set according to actual requirements, which are not limited.

Taking the preset value as 2 and the preset offset as 5 as an example. The schematic diagram of the frequency domain offset corresponding to the case of supporting 13 DMRS ports shown in "a" in FIG. 5 is shown in "a" in FIG. 9, based on "a" in FIG. 9, it can be seen that there are unoccupied REs on the second symbol occupied by the DMRS port group, the second symbol is the target symbol, and the RE occupied by the DMRS port 12 on the second symbol is offset by 5 REs relative to the starting position of the second symbol. The schematic diagram of the frequency domain offset corresponding to the case of supporting 13 DMRS ports shown in "a" in FIG. 6 is shown in "b" in FIG. 9, based on "b" in FIG. 9, it can be seen that there are unoccupied REs on the second symbol occupied by the DMRS port group, the second symbol is the target symbol, and the RE occupied by the CDM group 5 on the second symbol is offset by 5 REs relative to the starting position of the second symbol. The schematic diagram of the frequency domain offset corresponding to the case of supporting 13 DMRS ports shown in "c" in FIG. 7 is shown in "c" in FIG. 9, based on "c" in FIG. 9, it can be seen that there are unoccupied REs on the second symbol occupied by the DMRS port group, the second symbol is the target symbol, and the RE occupied by the CDM group 2 on the second symbol is offset by 5 REs relative to the starting position of the second symbol. The frequency domain offset corresponding to the case of supporting 14, 15, ... , 24 DMRS ports is similar to the frequency domain offset corresponding to the case of supporting 13 DMRS ports, which is not repeated herein.

In the case of dual OFDM symbols, compared with supporting up to 12 DMRS ports in related technologies, in the technical solution provided by the examples of the disclosure, in order to support more DMRS ports, the REs occupied by each DMRS port are reduced. For example, in the case of supporting 24 DMRS ports, each DMRS port of each PRB (Physical Resource Block) is reduced to only one RE. Therefore, in the MU-MIMO scenario with multiple DMRS ports, the technical solution provided by the examples of the present disclosure can be supported in the environment with low frequency selectivity, for example, small open space outdoor environments such as outdoor small concerts, tennis courts or outdoor cafes.

In some examples, the number of symbols occupied by the DMRS port group is a preset value, which is greater than or equal to 2, that is, multiple OFDM symbols occupied by the DMRS port group, that is, multiple OFDM symbols. In this case, each DMRS port included in the DMRS port group occupies one RE in the frequency division multiplexing manner. The DMRS port here can be a port in a CDM group or not. That is, in the example of the present disclosure, the DMRS port group uses the frequency division multiplexing manner to occupy RE in the frequency domain and uses the time division multiplexing manner to occupy RE in the time domain, as shown in FIG. 5; in the time domain, the time domain CDM with a specified length can also be used to occupy RE, as shown in FIG. 6.

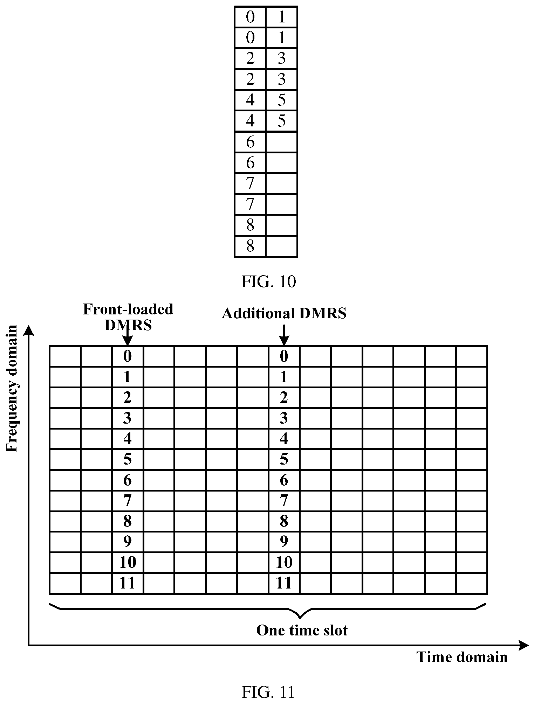

In some examples, the number of symbols occupied by the DMRS port group is a preset value, which is greater than or equal to 2, that is, multiple OFDM symbols occupied by the DMRS port group, that is, multiple OFDM symbols. In this case, each DMRS port included in the DMRS port group occupies one RE in the time division multiplexing manner. The DMRS port here can be a port in a CDM group or not. That is, in the example of the present disclosure, the DMRS port group uses the time division multiplexing manner to occupy RE in the time domain and uses the frequency division multiplexing manner to occupy RE in the frequency domain, as shown in FIG. 5; in the frequency domain, the frequency domain CDM with a specified length can also be used to occupy RE, as shown in FIG. 10. In FIG. 10, the rectangular boxes of numbers 0-8 respectively represent REs occupied by one CDM group, and the rectangular boxes without numbers are REs that are not occupied, multiple rectangular boxes with the same number correspond to one CDM group.

In some examples, a part of the symbols occupied in the DMRS port group is located at a front-loaded symbol position (s), and another part of the symbols occupied by the DMRS port group is located at an additional symbol position (s). In the example of the present disclosure, a DMRS port located at a front-loaded symbol position may be referred to as a front-loaded DMRS port, a DMRS port located at an additional symbol position may be referred to as an additional DMRS port, and both the front-loaded DMRS port and the additional DMRS port together can support more orthogonal DMRS ports. The DMRS ports in the DMRS port group can belong to one or more CDM combinations, or they can not belong to CDM combinations, which is not limited.

Taking the preset value of 2 as an example. Assuming that the first three symbols are front-loaded symbols, in two OFDM symbols occupied by the DMRS port group, the first OFDM symbol is the third symbol of one time slot, that is, the first OFDM symbol is located at the front-loaded symbol position, the second OFDM symbol is the eighth symbol of one time slot, that is, the second OFDM symbol is located at the additional symbol position after the preamble symbol, as shown in FIG. 11. At this time, the first OFDM symbol is implemented using the preamble symbol, and the DMRS port on the second OFDM symbol is implemented using the additional symbol. The number of additional symbols and the position of additional symbols in a time slot are flexible. In FIG. 11, the rectangular boxes of numbers 0-11 respectively represent REs occupied by one CDM group, and the rectangular boxes without numbers are REs that are not occupied, multiple rectangular boxes with the same number correspond to one CDM group.

In the technical solution provided by the examples of the disclosure, the design of increasing the number of DMRS ports is carried out without increasing the existing DMRS overhead, that is, the design of increasing the number of DMRS ports is carried out using only 1 to 2 OFDM symbols. The scope of disclosure of the technical solution provided by the examples of the disclosure is expanded through additional DMRS.

In one example, in a DMRS port group, all symbols occupied by all DMRS ports are located at the front-loaded symbol positions. In the example of the present disclosure, the DMRS ports in the DMRS port group may belong to one or more CDM combinations or may not belong to CDM combinations, which is not limited herein.

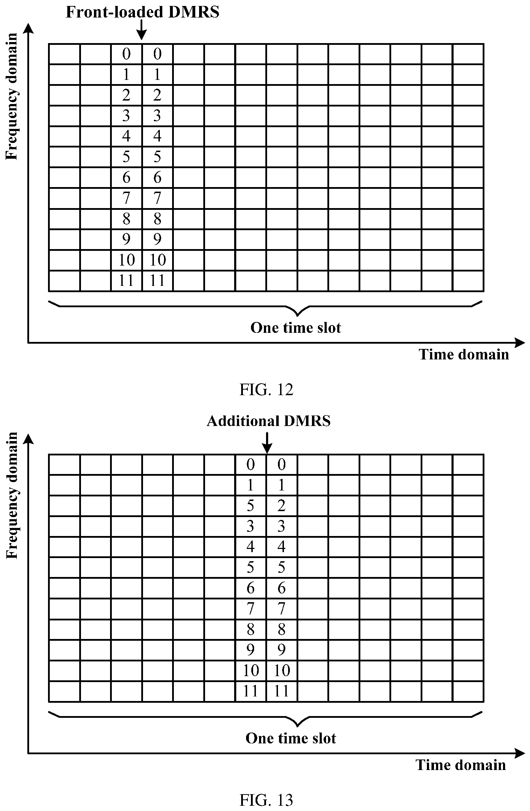

Taking the preset value of 2 as an example. Assuming that the first four symbols are front-loaded symbols, and the DMRS port group occupies two OFDM symbols, and these two OFDM symbols are the third symbol and the fourth symbol of one time slot, respectively. That is, these two OFDM symbols are located at the front-loaded symbol positions, as shown in FIG. 12. In FIG. 12, the rectangular boxes of numbers 0-11 respectively represent REs occupied by one CDM group, and the rectangular boxes without numbers are REs that are not occupied, multiple rectangular boxes with the same number correspond to one CDM group.

In one example, in a DMRS port group, all symbols occupied by all DMRS ports are located at the additional symbol position. In the example of the present disclosure, the DMRS ports in the DMRS port group may belong to one or more CDM combinations or may not belong to CDM combinations, which is not limited herein.

Taking the preset value of 2 as an example. Assuming that the first four symbols are front-loaded symbols, and the DMRS port group occupies two OFDM symbols, and these two OFDM symbols are the seventh symbol and the eighth symbol of one time slot, respectively. That is, these two OFDM symbols are located at the additional symbol positions after the front-loaded symbol position, as shown in FIG. 13. In FIG. 13, the rectangular boxes of numbers 0-11 respectively represent REs occupied by one CDM group, and the rectangular boxes without numbers are REs that are not occupied, multiple rectangular boxes with the same number correspond to one CDM group.

In the example of the disclosure, the number of front-loaded symbols can be set according to actual requirements.

In some examples, symbols occupied by the DMRS port group are assigned to one or more time slots; when symbols occupied by the DMRS port group are assigned to multiple time slots, these time slots may be continuous or discontinuous. The number of symbols occupied by the DMRS port group in each time slot and their positions in the time slot are flexible. The DMRS port group in each time slot can be located at either a front-loaded symbol position or an additional symbol position.

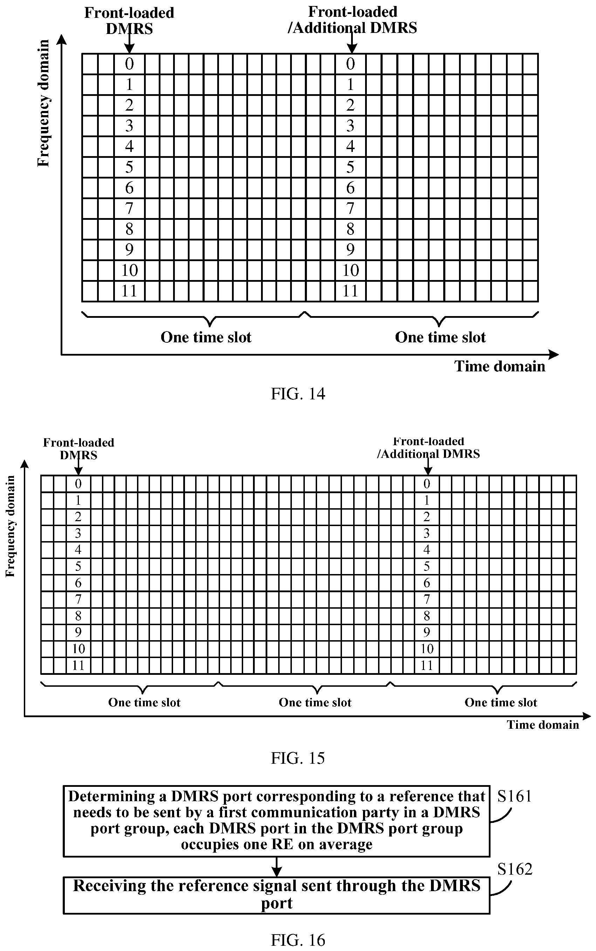

Taking the preset value of 2 as an example. The DMRS port group occupies one OFDM symbol in one time slot. Wherein, the OFDM symbol is assigned to two time slots, which may be continuous, as shown in FIG. 14, and the two time slots may also be discontinuous, as shown in FIG. 15. In FIG. 14 and FIG. 15, the rectangular boxes of numbers 0-11 respectively represent REs occupied by one DMRS port, and the rectangular boxes without numbers are REs that are not occupied.

Based on the configuration of the DMRS port groups occupying symbols corresponding to the time slot, the above block S31 may be: determining, based on a symbol occupied by the DMRS port group assigned to a current time slot, a DMRS port corresponding to the reference signal that needs to be sent to the second communication party in the DMRS port group in the current time slot. Here, the symbol occupied by the DMRS port group assigned to the current time slot can also be assigned to other time slots, that is, the symbol occupied by the DMRS port group may be assigned to multiple time slots.

In the technical solution provided by the examples of the disclosure, the design of increasing the number of DMRS ports is carried out without increasing the existing DMRS overhead, that is, the design of increasing the number of DMRS ports is carried out using only 1 to 2 OFDM symbols. By using multiple time slots, the scope of disclosure of the technical solutions provided by the examples of the present disclosure is expanded, for example, it is applicable to scenarios where the demodulation delay is not sensitive and there are a large number of reference signals to be transmitted.

In some examples, when the first communication party is a base station and the second communication party is a UE, the first communication party may also send a preset number of bits of DCI to the second communication party, the DCI indicates the DMRS port corresponding to the reference signal in the DMRS port group; the maximum value corresponding to the preset number of bits is greater than or equal to the maximum number of DMRS ports included in the DMRS port group.

When the second communication party is a base station and the first communication party is a UE, the first communication party may also receive a preset number of bits of DCI sent by the second communication party, the DCI indicates the DMRS port corresponding to the reference signal in the DMRS port group; the maximum value corresponding to the preset number of bits is greater than or equal to the maximum number of DMRS ports included in the DMRS port group.

For example, if the preset value is 2, and one OFDM symbol includes 12 REs, then the maximum number of DMRS ports included in the DMRS port group is 2*12=24, and the maximum value corresponding to 4 bits is power 4 of 2=16, the maximum value corresponding to 5 bits is power 5 of 2=32, 16<124<32, therefore, the first communication party may send the DCI using 5 bits or more to the second communication party, or, the first communication party may receive the DCI of 5 bits or more sent by the second communicating party. In this way, the base station can accurately configure the DMRS port used by the UE to receive or send the reference signal to the UE.

For example, the base station takes a value of a port indication information field assigned for the UE based on a preset Rank configuration, carries the value of the port indication information field in the DCI, and sends it to the UE. Subsequently, the base station sends a reference signal to the UE based on a DMRS port set corresponding to the value of the port indication information field in the DCI, and receives the reference signal sent by the UE. The UE sends the reference signal to the base station based on the DMRS port set corresponding to the value of the port indication information field in the DCI, and receives the reference signal sent by the base station.

The maximum number of symbols (max Length) is 2, and Rank=1, Rank=12, and Rank24 are used as examples for illustration. The configuration of Rank=1 can be shown in Table 1, the configuration of Rank=12 can be shown in Table 2, and the configuration of Rank=24 can be shown in Table 3.

**Table 1**

| Port indication information field value | Number of DMRS CDM groups without data | DMR S port set | Number of front-loaded symbols |
|---|---|---|---|
| 0 | 6 | 0 | 1 |
| 1 | 6 | 1 | 1 |
| 2 | 6 | 2 | 1 |
| 3 | 6 | 3 | 1 |
| 4 | 6 | 4 | 1 |
| 5 | 6 | 5 | 1 |
| 6 | 6 | 6 | 1 |
| 7 | 6 | 7 | 1 |
| 8 | 6 | 8 | 1 |
| 9 | 6 | 9 | 1 |
| 10 | 6 | 10 | 1 |
| 11 | 6 | 11 | 1 |
| 12 | 6 | 12 | 2 |
| 13 | 6 | 13 | 2 |
| 14 | 6 | 14 | 2 |
| 15 | 6 | 15 | 2 |
| 16 | 6 | 16 | 2 |
| 17 | 6 | 17 | 2 |
| 18 | 6 | 18 | 2 |
| 19 | 6 | 19 | 2 |
| 20 | 6 | 20 | 2 |
| 21 | 6 | 21 | 2 |
| 22 | 6 | 22 | 2 |
| 23 | 6 | 23 | 2 |
| 24 | Retain | Retain | Retain |
| 25 | Retain | Retain | Retain |
| 26 | Retain | Retain | Retain |
| 27 | Retain | Retain | Retain |
| 28-31 | Retain | Retain | Retain |

Based on the table 1, the port indication information field value can be expressed as "Value", the DMRS port can be expressed as "DMRS CDM group(s)", the number of DMRS CDM groups without data transmission can be expressed as "Number of DMRS CDM group(s) without data", the number of front-loaded symbols can be expressed as "Number of front-load symbols". Bases on the table 1, the base station can randomly select a port indication information field value from the port indication information field values 0-23, carry the port indication information field value in the DCI, and send it to the UE. Subsequently, the base station sends a reference signal to the UE based on one DMRS port corresponding to the value of the port indication information field in the DCI, and receives the reference signal sent by the UE. The UE sends the reference signal to the base station based on one DMRS port corresponding to the value of the port indication information field in the DCI, and receives the reference signal sent by the base station.

**Table 2**

| Port indication information field value | Number of DMRS CDM groups without data | DMRS port set | Number of front-loaded symbols |
|---|---|---|---|
| 0 | 6 | 0-11 | 1 |
| 1 | 6 | 0-5;12-17 | 2 |
| 2 | Retain | Retain | Retain |
| 3 | Retain | Retain | Retain |
| 4 | Retain | Retain | Retain |
| 5-31 | Retain | Retain | Retain |

Bases on the table 2, the base station can randomly select a port indication information field value from the port indication information field values 0-1, carry the port indication information field value in the DCI, and send it to the UE. Subsequently, the base station sends a reference signal to the UE based on 12 DMRS ports corresponding to the value of the port indication information field in the DCI, and receives the reference signal sent by the UE. The UE sends the reference signal to the base station based on 12 DMRS ports corresponding to the value of the port indication information field in the DCI, and receives the reference signal sent by the base station.

**Table 3**

| Port indication information field value | Number of DMRS CDM groups without data | DMR S port set | Number of front-loaded symbols |
|---|---|---|---|
| 0 | 6 | 0-23 | 2 |
| 1 | Retain | Retain | Retain |
| 2 | Retain | Retain | Retain |
| 3 | Retain | Retain | Retain |
| 4 | Retain | Retain | Retain |
| 5-31 | Retain | Retain | Retain |

Bases on the table 3, the base station can select a port indication information field value 0, carry the port indication information field value in the DCI, and send it to the UE. Subsequently, the base station sends a reference signal to the UE based on 24 DMRS ports corresponding to the value of the port indication information field in the DCI, and receives the reference signal sent by the UE. The UE sends the reference signal to the base station based on 24 DMRS ports corresponding to the value of the port indication information field in the DCI, and receives the reference signal sent by the base station.

In this example of the present disclosure, the DMRS port corresponding to each port indication information field value may be set according to actual requirements. For example, the port indication information field value 1 in Table 2 may correspond to DMRS port sets 0-5 and 12-17 and may also correspond to DMRS port sets 12-23, etc., which is not limited.

In order to support more orthogonal DMRS ports, it may be necessary to modify the corresponding signaling process, such as modifying or updating the design related to DMRS indication in the corresponding PBCH (Physical Broadcast Channel), RRC (Radio Resource Control), MAC CE (Media Access Control Customer Edge) or DCI, to support the technical solution provided by the examples of the disclosure. The specific signaling updates/modifications that may be involved include related parameters such as MIB (Master Information Block), SIB (System Information Block) 1, MSG (Message) 2, MSG4, RRC setup (Setup), Security Mode Command, number of DMRS ports in RRC reconfiguration (Reconfiguration), location information of DMRS port occupation symbol, length of DMRS occupation symbol, mapping type, whether to configure additional DMRS, etc.

The technical solutions provided by the examples of the present disclosure can increase the maximum number of DMRS ports supported in the current standard from 12 to 24 without increasing the existing DMRS overhead, so as to meet the requirements of increasing the multiplexing capacity of downlink and uplink DMRS and increasing the number of forward ports of DMRS. New disclosure scenarios such as holographic communications, real-time UHD (Ultra High Definition) video, security surveillance, machine vision, and XR-Extended Reality, etc., In these scenarios, the requirements for multiplexing capacity of downlink and uplink DMRS are increasing, and the number of orthogonal ports of DMRS needs to be increased.

Corresponding to the above method for sending a signal, an example of the present disclosure provides a method for receiving a signal, which is applied to a second communication party, as shown in FIG. 16, wherein the method includes:
Block S161, determining a DMRS port corresponding to a reference signal that needs to be sent by a first communication party in a DMRS port group, each DMRS port in the DMRS port group occupies one RE on average.
Block S162, receiving the reference signal sent through the DMRS port.

Wherein, the first communication party is a base station, and the second communication party is a UE, or, the first communication party is a UE, and the second communication party is a base station.

In the technical solutions provided by the examples of the present disclosure, when receiving a reference signal, the first communication party uses the corresponding DMRS port in the DMRS port group to send the reference signal to the second communication party, and each DMRS port in the DMRS port group occupies one RE on average, so that the CP-OFDM waveform can support the maximum number of DMRS ports up to the number of REs included in the OFDM symbols occupied by the DMRS port group.

In some examples, the number of symbols occupied by the DMRS port group is 1;
each DMRS port included in the DMRS port group occupies one resource element in the frequency division multiplexing manner; or
Each CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

In some examples, the first preset number of resource elements occupied by each CDM group are adjacent; or
the first preset number of resource elements occupied by each CDM group are not adjacent.

In some examples, the number of symbols occupied by the DMRS port group is a preset value; and the preset value is greater than or equal to 2;
each DMRS port included in the DMRS port group occupies one RE in the frequency division multiplexing manner; or
each DMRS port included in the DMRS port group occupies one resource element in a time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and time division multiplexing manner; each CDM group included in the DMRS port group occupies resource elements of the preset value in the frequency division multiplexing manner and a time domain CDM manner with a length of the preset value, each CDM group includes the preset number of DMRS ports; or
each CDM group included in the DMRS port group occupies a second preset number of resource elements in a frequency domain CDM manner with a second preset length and the time domain CDM manner with the length of the preset value. Each CDM group includes the second preset number of DMRS ports, wherein a value of the second preset number is greater than or equal to a value of the second preset length, and less than or equal to a value of the second preset length multiplied by the preset value.

In some examples, for a target symbol of all symbols occupied by the DMRS port group, the occupied resource element is offset by a preset offset relative to a starting position of the target symbol. The target symbol is a symbol that has a resource element not occupied by a DMRS port included in the DMRS port group.

In some examples, multiple resource elements occupied by each CDM group on each symbol are adjacent; or
multiple resource elements occupied by each CDM group on each symbol are not adjacent.

In some examples, a part of the symbols occupied by the DMRS port group is located at a front-loaded symbol position (s), and another part of the symbols occupied by the DMRS port group is located at the additional symbol position (s); or
All symbols occupied by the DMRS port group are located at front-loaded symbol positions; or
all symbols occupied by the DMRS port group are located at additional symbol positions.

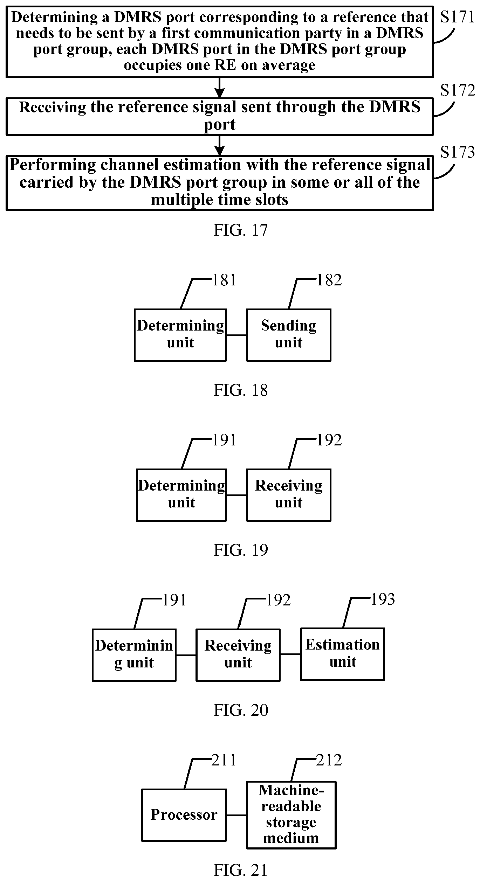

In some examples, the symbols occupied by the DMRS port group are assigned to one or more time slots; the number of multiple time slots is less than or equal to the preset value;
when the symbols occupied by the DMRS port group are assigned to multiple time slots, the multiple time slots are continuous or discontinuous.
When the symbols occupied by the DMRS port group are assigned to multiple time slots, as shown in FIG. 17, the above method for receiving a signal can also include block S173. Blocks S171-S172 are the same as the above-mentioned blocks S161-S162.

Block S173, performing channel estimation with the reference signal carried by the DMRS port group in some or all of the multiple time slots.

In the example of the present disclosure, when the symbols occupied by the DMRS port group are assigned to multiple time slots, the device can use the reference signals carried by the DMRS port group on some or all of the time slots to perform channel estimation, which improves the flexibility of channel estimation.

In some examples, the above-mentioned block S173 may specifically be:
When the DMRS port group is not included in one time slot of the multiple time slots, performing channel estimation with a reference signal carried by the DMRS port group in a time slot before this time slot; or, performing channel estimation with a reference signal carried by the DMRS port group in a time slot after this time slot; or performing channel estimation with reference signals carried by the DMRS port group in a time slot before this time slot and a time slot after this time slot.

Still taking the multiple time slots shown in FIG. 15 as an example, in FIG. 15, the DMRS port group is not included in the second time slot. At this time, a reference signal carried by the DMRS port group in the first time slot can be used to perform channel estimation for the second time slot, the reference signal carried by the DMRS port group in the third time slot can also be used to perform channel estimation for the second time slot, and the reference signals carried by the DMRS port groups in these two time slots (the second time slot and the third time slot) can also be used to perform channel estimation for the second time slot.

In some examples, the above-mentioned block S173 may specifically be:
When the DMRS port group is included in one time slot of the multiple time slots, performing channel estimation with a reference signal carried by the DMRS port group in this time slot; or, performing channel estimation with reference signals carried by the DMRS port group in this time slot and a time slot before this time slot; or performing channel estimation with reference signals carried by the DMRS port group in a time slot before this time slot and a time slot after this time slot.

Still taking the multiple time slots shown in FIG. 15 as an example, in FIG. 15, the DMRS port group is included in the first time slot. At this time, the reference signal carried by the DMRS port group in the first time slot itself can be used to perform channel estimation for the first time slot, the reference signals carried by the DMRS port groups in the first time slot and the third time slot can also be used to perform channel estimation for the first time slot.

If there is one time slot before the first time slot that implements the corresponding DMRS port group occupation symbol, such as the 0th time slot, then the reference signals carried by the DMRS port groups in the first time slot and the 0th time slot can be used to perform channel estimation for the first time slot. In the example of the present disclosure, the reference signals carried by the DMRS port groups in the 0th time slot, the first time slot and the third time slot can be used to perform channel estimation for the first time slot.

In the example of the present disclosure, taking there is only one time slot provided before and after as an example, and the number of time slots provided before and after is not limited. Accordingly, the number of time slots provided before and after for auxiliary channel estimation is not limited. For example, the reference signals carried by DMRS port groups in the previous two time slots can be used for channel estimation.

In some examples, the above-mentioned method for receiving a signal may also include:
When the first communication party is a base station and the second communication party is a UE, the second communication party receives a preset number of bits of DCI sent by the first communication party, the DCI indicates a DMRS port corresponding to the reference signal in the DMRS port group; a maximum value corresponding to the preset number of bits is greater than or equal to a maximum number of DMRS ports included in the DMRS port group;
When the second communication party is a base station and the first communication party is a UE, the second communication party sends a preset number of bits of DCI to the first communication party, the DCI indicates a DMRS port corresponding to the reference signal in the DMRS port group; a maximum value corresponding to the preset number of bits is greater than or equal to a maximum number of DMRS ports included in the DMRS port group.

Corresponding to the above signal transmitting method, an example of the present disclosure provides an apparatus for sending a signal, applied to a first communication party, as shown in FIG. 18, wherein the apparatus includes:
a determination unit 181, for determining a DMRS port corresponding to a reference signal that needs to be sent to a second communication party in a DMRS port group, each DMRS port in the DMRS port group occupies one resource element on average;
a sending unit 182, for sending the reference signal through the DMRS port;
wherein, the first communication party is a base station, and the second communication party is a UE, or, the first communication party is a UE, and the second communication party is a base station.

In the technical solutions provided by the examples of the present disclosure, when sends a reference signal, the first communication party uses the corresponding DMRS port in the DMRS port group to send the reference signal to the second communication party, and each DMRS port in the DMRS port group occupies one RE on average, so that the CP-OFDM waveform can support the maximum number of DMRS ports up to the number of REs included in the OFDM symbols occupied by the DMRS port group.

In some examples, the number of symbols occupied by the DMRS port group is 1;
each DMRS port included in the DMRS port group occupies one resource element in the frequency division multiplexing manner; or
each CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

In some examples, the first preset number of resource elements occupied by each CDM group are adjacent; or
the first preset number of resource elements occupied by each CDM group are not adjacent.

In some examples, the number of symbols occupied by the DMRS port group is a preset value; and the preset value is greater than or equal to 2;
each DMRS port included in the DMRS port group occupies one resource element in the frequency division multiplexing manner; or
each DMRS port included in the DMRS port group occupies one resource element in the time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and time division multiplexing manner; each CDM group included in the DMRS port group occupies resource elements of the preset value in the frequency division multiplexing manner and a time domain CDM manner with a length of the preset value, each CDM group includes the preset number of DMRS ports; or
each CDM group included in the DMRS port group occupies a second preset number of resource elements in a frequency domain CDM manner with a second preset length and the time domain CDM manner with the length of the preset value. Each CDM group includes the second preset number of DMRS ports, wherein a value of the second preset number is greater than or equal to a value of the second preset length, and less than or equal to a value of the second preset length multiplied by the preset value.

In some examples, for a target symbol of all symbols occupied by the DMRS port group, the occupied resource element is offset by a preset offset relative to a starting position of the target symbol. The target symbol is a symbol that has a resource element not occupied by the DMRS port included in the DMRS port group.

In some examples, multiple resource elements occupied by each CDM group on each symbol are adjacent; or
multiple resource elements occupied by each CDM group on each symbol are not adjacent.

In some examples, a part of the symbols occupied in the DMRS port group are located at the front-loaded symbol position (s), and another part of the symbols occupied by the DMRS port group are located at the additional symbol position (s); or
all symbols occupied by the DMRS port group are located at front-loaded symbol positions; or
all symbols occupied by the DMRS port group are located at additional symbol positions.

In some examples, the symbols occupied by the DMRS port group are assigned to one or more time slots;
when the symbols occupied by the DMRS port group are assigned to multiple time slots, the multiple time slots are continuous or discontinuous;
the determination unit is specifically for determining, based on a symbol occupied by the DMRS port group assigned to the current time slot, the DMRS port corresponding to the reference signal to be sent to the second communication party in the DMRS port group in the current time slot.

In some example, the above-mentioned apparatus may also include a processing unit, for:
when the first communication party is a base station and the second communication party is a UE, sending a preset number of bits of DCI to the second communication party, the DCI indicates a DMRS port corresponding to the reference signal in the DMRS port group; a maximum value corresponding to the preset number of bits is greater than or equal to the maximum number of DMRS ports included in the DMRS port group;
when the second communication party is a base station and the first communication party is a UE, receiving a preset number of bits of DCI sent by the second communication party, the DCI indicates a DMRS port corresponding to the reference signal in the DMRS port group; a maximum value corresponding to the preset number of bits is greater than or equal to the maximum number of DMRS ports included in the DMRS port group.

Corresponding to the above method for receiving a signal, an example of the present disclosure provides an apparatus for receiving a signal, applied to a second communication party, as shown in FIG. 19, wherein the apparatus includes:
a determination unit 191, for determining a DMRS port corresponding to a reference signal that needs to be sent by a first communication party in a DMRS port group, each DMRS port in the DMRS port group occupies one resource element on average;
a receiving unit 192, for receiving the reference signal through the DMRS port;
wherein, the first communication party is a base station, and the second communication party is a UE, or, the first communication party is a UE, and the second communication party is a base station.

In the technical solutions provided by the examples of the present disclosure, when receiving a reference signal, the first communication party uses the corresponding DMRS port in the DMRS port group to send the reference signal to the second communication party, and each DMRS port in the DMRS port group occupies one RE on average, so that the CP-OFDM waveform can support the maximum number of DMRS ports up to the number of REs included in the OFDM symbols occupied by the DMRS port group.

In some examples, the number of symbols occupied by the DMRS port group is 1;
each DMRS port included in the DMRS port group occupies one RE in the frequency division multiplexing manner; or
each CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

In some examples, the first preset number of resource elements occupied by each CDM group are adjacent; or
the first preset number of resource elements occupied by each CDM group are not adjacent.

In some examples, the number of symbols occupied by the DMRS port group is a preset value; and the preset value is greater than or equal to 2;
each DMRS port included in the DMRS port group occupies one resource element in the frequency division multiplexing manner; or
each DMRS port included in the DMRS port group occupies one resource element in the time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and time division multiplexing manner; each CDM group included in the DMRS port group occupies resource elements of the preset value in the frequency division multiplexing manner and a time domain CDM manner with a length of the preset value, each CDM group includes the preset number of DMRS ports; or
each CDM group included in the DMRS port group occupies a second preset number of resource elements in a frequency domain CDM manner with a second preset length and the time domain CDM manner with the length of the preset value. Each CDM group includes the second preset number of DMRS ports, wherein a value of the second preset number is greater than or equal to a value of the second preset length, and less than or equal to a value of the second preset length multiplied by the preset value.

In some examples, for a target symbol of all symbols occupied by the DMRS port group, the occupied resource element is offset by a preset offset relative to a starting position of the target symbol. The target symbol is a symbol that has a resource element not occupied by the DMRS port included in the DMRS port group.

In some examples, multiple resource elements occupied by each CDM group on each symbol are adjacent; or
multiple resource elements occupied by each CDM group on each symbol are not adjacent.

In some examples, a part of symbols occupied by the DMRS port group are located at a front-loaded symbol position (s), and another part of symbols occupied by the DMRS port group are located at an additional symbol position (s); or
all symbols occupied by the DMRS port group are located at front-loaded symbol positions; or
all symbols occupied by the DMRS port group are located at additional symbol positions.

In some examples, the symbols occupied by the DMRS port group are assigned to one or more time slots;
when the symbols occupied by the DMRS port group are assigned to multiple time slots, the multiple time slots are continuous or discontinuous.

In this case, as shown in FIG. 20, the above-mentioned apparatus may also include:
an estimation unit 193, for performing channel estimation with the reference signal carried by the DMRS port group in some or all of the multiple time slots when the symbols occupied by the DMRS port group are assigned to multiple time slots.

In some examples, the estimation unit 193 may specifically for:
when the symbols occupied by the DMRS port group are assigned to multiple time slots, and when the DMRS port group is not included in one time slot of the multiple time slots, performing channel estimation with a reference signal carried by the DMRS port group in a time slot before this time slot; or, performing channel estimation with a reference signal carried by the DMRS port group in a time slot after this time slot; or performing channel estimation with reference signals carried by the DMRS port group in a time slot before this time slot and a time slot after this time slot;
when the DMRS port group is included in one time slot of the multiple time slots, performing channel estimation with a reference signal carried by the DMRS port group in this time slot; or, performing channel estimation with reference signals carried by the DMRS port group in this time slot and a time slot before this time slot; or performing channel estimation with reference signals carried by the DMRS port group in a time slot before this time slot and a time slot after this time slot.

In some example, the above-mentioned apparatus may also include a processing unit, for:
when the first communication party is a base station and the second communication party is a UE, receiving a preset number of bits of DCI sent by the first communication party are received, the DCI indicates the DMRS port corresponding to the reference signal in the DMRS port group; a maximum value corresponding to the preset number of bits is greater than or equal to a maximum number of DMRS ports included in the DMRS port group;
when the second communication party is a base station and the first communication party is a UE, sending a preset number of bits of DCI are sent to the first communication party, the DCI indicates a DMRS port corresponding to the reference signal in the DMRS port group; a maximum value corresponding to the preset number of bits is greater than or equal to a maximum number of DMRS ports included in the DMRS port group.

The example of the present disclosure further provides an electronic device, as shown in FIG. 21, including a processor 211 and a machine-readable storage medium 212, where the machine-readable storage medium 212 stores machine-executable instructions that can be executed by the processor 211, cause the processor 211 to: implement the method of any one of the examples in the above-mentioned FIGS 3-17.

In the example of the present disclosure, the electronic equipment may be a base station or a UE, such as the above-mentioned first communication party and second communication party.

The communication bus aforementioned in the electronic device may be a peripheral component interconnect (PCI) bus or an extended industry standard architecture (EISA) bus and the like. The communication bus can include an address bus, a data bus, a control bus, or the like. For representation, only one thick line is shown in the figure, which does not mean there is only one communication bus or one type of communication bus.
the communications interface is used for communication between the aforementioned electronic device and other devices.

The memory can include a random access memory (RAM), or can include a non-volatile memory (NVM), for example at least one disk memory. In an example, the memory can also be at least one storage device located away from the processor described above.

The aforementioned processor can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

In another example of the present disclosure, it is also provided a computer readable storage medium. The computer readable storage medium stores computer program thereon, which when executed by a processor, cause the processor to implement the method of the examples of the above-mentioned FIGS. 3-16 when executing the computer program.

In another example of the present disclosure, it is also provided a computer program which, when executed by a processor, causes the processor to implement the method of the examples of the above-mentioned FIGS. 3-17.

In the aforementioned examples, it may be implemented in whole or in part by software, hardware, firmware, or any combination thereof. When implemented by software, it may be implemented in whole or in part in the form of a computer program product. The computer program product includes one or more computer instructions. The processes or functions described in accordance with the examples of the present invention is produced in whole or in part, when the computer program instructions are loaded and executed on a computer. The computer may be a general-purpose computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a cable (such as a coaxial cable, an optical fiber, a digital subscriber line (DSL)) or wireless (such as infrared, wireless, microwave, etc.). The computer-readable storage medium may be any available medium that may be accessed by a computer or a data storage device such as a server or a data center containing one or more available medium integrations. The available media may be magnetic media (such as floppy disks, hard disks, magnetic tapes), optical media (such as DVDs), or semiconductor media (such as solid state disk (SSD)), etc.

It should be noted that, the relationship terms herein such as "first", "second" and the like are only used to distinguish one entity or operation from another entity or operation, but do not necessarily require or imply that there is actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the examples are described in corresponding ways, same or similar parts in each of the examples can be referred to one another, and the parts emphasized are differences to other examples. For examples of the device, electronic equipment, storage medium and computer programs, since they are similar to the examples of the method, the description thereof is relatively simple; the relating parts could refer to the parts of the description of examples of the method.

The examples described above are merely preferred examples of the present disclosure, and not intended to limit the scope of the present disclosure. Any modifications, equivalents, improvements or the like within the spirit and principle of the disclosure should be included in the scope of the disclosure.

## Claims

1. A method for sending a signal, which is applied to a first communication party and comprises:
determining a De-Modulation Reference Signal DMRS port corresponding to a reference signal that needs to be sent to a second communication party in a DMRS port group, each DMRS port in the DMRS port group occupies one resource element on average;
sending the reference signal through the DMRS port;
wherein, the first communication party is a base station, and the second communication party is a User Equipment UE, or, the first communication party is a UE, and the second communication party is a base station.

2. The method of claim 1, wherein the number of symbols occupied by the DMRS port group is 1;
each DMRS port included in the DMRS port group occupies one resource element in a frequency division multiplexing manner; or
each Code Division Multiplexing CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

3. The method of claim 2, wherein, the first preset number of resource elements occupied by each CDM group are adjacent; or
the first preset number of resource elements occupied by each CDM group are not adjacent.

4. The method of claim 1, wherein the number of symbols occupied by the DMRS port group is a preset value, which is greater than or equal to 2;
each DMRS port included in the DMRS port group occupies one resource element in a frequency division multiplexing manner; or
each DMRS port included in the DMRS port group occupies one resource element in a time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and the time division multiplexing manner; each CDM group included in the DMRS port group occupies resource elements of the preset value in the frequency division multiplexing manner and a time domain CDM manner with a length of the preset value, each CDM group includes DMRS ports of the preset value; or
each CDM group included in the DMRS port group occupies a second preset number of resource elements in a frequency domain CDM manner with a second preset length and the time domain CDM manner with the length of the preset value, each CDM group includes the second preset number of DMRS ports, wherein a value of the second preset number is greater than or equal to a value of the second preset length, and less than or equal to a value of the second preset length multiplied by the preset value; or
each CDM group included in the DMRS port group occupies a third preset number of resource elements in a frequency domain CDM manner and time division multiplexing manner of a third preset length, and each CDM group includes the third preset number of DMRS ports, and a value of the third preset number is greater than or equal to a value of the third preset length.

5. The method of claim 4, wherein, for a target symbol of all symbols occupied by the DMRS port group, the occupied resource element is offset by a preset offset relative to a starting position of the target symbol, wherein the target symbol is a symbol that has a resource element not occupied by a DMRS port included in the DMRS port group.

6. The method of claim 4, wherein, multiple resource elements occupied by each CDM group on each symbol are adjacent; or
multiple resource elements occupied by each CDM group on each symbol are not adjacent.

7. The method of any one of claims 2-6, wherein, a part of symbols occupied by the DMRS port group are located at a front-loaded symbol position (s), and another part of symbols occupied by the DMRS port group are located at an additional symbol position (s); or
all symbols occupied by the DMRS port group are located at front-loaded symbol positions; or
all symbols occupied by the DMRS port group are located at additional symbol positions.

8. The method of any one of claims 2-6, wherein symbols occupied by the DMRS port group are assigned to one or more time slots;
when the symbols occupied by the DMRS port group are assigned to multiple time slots, the multiple time slots are continuous or discontinuous;
wherein determining a DMRS port corresponding to a reference signal that needs to be sent to a second communication party in the DMRS port group comprises:
determining, based on a symbol occupied by the DMRS port group assigned to a current time slot, a DMRS port corresponding to the reference signal that needs to be sent to the second communication party in the DMRS port group in the current time slot.

9. The method of any one of claims 1-6, further comprising:
when the first communication party is the base station and the second communication party is the UE, sending a preset number of bits of Downlink Control Information DCI to the second communication party, the DCI indicates a DMRS port corresponding to the reference signal in the DMRS port group; a maximum value corresponding to the preset number of bits is greater than or equal to a maximum number of DMRS ports included in the DMRS port group;
when the second communication party is the base station and the first communication party is the UE, receiving a preset number of bits of DCI sent by the second communication party, the DCI indicates a DMRS port corresponding to the reference signal in the DMRS port group; a maximum value corresponding to the preset number of bits is greater than or equal to a maximum number of DMRS ports included in the DMRS port group.

10. A method for receiving a signal, applied to a second communication party, the method comprising:
determining a De-Modulation Reference Signal DMRS port corresponding to a reference signal that needs to be sent by a first communication party in a DMRS port group, each DMRS port in the DMRS port group occupies one resource element on average;
receiving the reference signal sent through the DMRS port;
wherein, the first communication party is a base station, and the second communication party is a User Equipment UE, or, the first communication party is a UE, and the second communication party is a base station.

11. The method of claim 10, wherein the number of symbols occupied by the DMRS port group is 1;
each DMRS port included in the DMRS port group occupies one resource element in a frequency division multiplexing manner; or
each Code Division Multiplexing CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

12. The method of claim 11, wherein, the first preset number of resource elements occupied by each CDM group are adjacent; or
the first preset number of resource elements occupied by each CDM group are not adjacent.

13. The method of claim 10, wherein the number of symbols occupied by the DMRS port group is a preset value, which is greater than or equal to 2;
each DMRS port included in the DMRS port group occupies one resource element in a frequency division multiplexing manner; or
each DMRS port included in the DMRS port group occupies one resource element in a time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and the time division multiplexing manner; each CDM group included in the DMRS port group occupies resource elements of the preset value in the frequency division multiplexing manner and a time domain CDM manner with a length of the preset value, each CDM group includes DMRS ports of the preset value; or
each CDM group included in the DMRS port group occupies a second preset number of resource elements in a frequency domain CDM manner with a second preset length and the time domain CDM manner with the length of the preset value, each CDM group includes the second preset number of DMRS ports, wherein a value of the second preset number is greater than or equal to a value of the second preset length, and less than or equal to a value of the second preset length multiplied by the preset value; or
each CDM group included in the DMRS port group occupies a third preset number of resource elements in a frequency domain CDM manner and time division multiplexing manner of a third preset length, and each CDM group includes the third preset number of DMRS ports, and a value of the third preset number is greater than or equal to a value of the third preset length.

14. The method of claim 13, wherein, for a target symbol of all symbols occupied by the DMRS port group, the occupied resource element is offset by a preset offset relative to a starting position of the target symbol, wherein the target symbol is a symbol that has a resource element not occupied by a DMRS port included in the DMRS port group.

15. The method of claim 13, wherein, multiple resource elements occupied by each CDM group on each symbol are adjacent; or
multiple resource elements occupied by each CDM group on each symbol are not adjacent.

16. The method of any one of claims 11-15, wherein, a part of symbols occupied by the DMRS port group are located at a front-loaded symbol position (s), and another part of symbols occupied by the DMRS port group are located at an additional symbol position (s); or
all symbols occupied by the DMRS port group are located at front-loaded symbol positions; or
all symbols occupied by the DMRS port group are located at additional symbol positions.

17. The method of any one of claims 11-15, wherein symbols occupied by the DMRS port group are assigned to one or more time slots;
when the symbols occupied by the DMRS port group are assigned to multiple time slots, the multiple time slots are continuous or discontinuous;
the method further comprises:
when the symbols occupied by the DMRS port group are assigned to multiple time slots, performing channel estimation with the reference signal carried by the DMRS port group in some or all of the multiple time slots.

18. The method of claim 17, wherein, performing channel estimation with the reference signal carried by the DMRS port group in some or all of the multiple time slots, comprises:
when the DMRS port group is not included in one time slot of the multiple time slots, performing channel estimation with a reference signal carried by the DMRS port group in a time slot before this time slot; or, performing channel estimation with a reference signal carried by the DMRS port group in a time slot after this time slot; or performing channel estimation with reference signals carried by the DMRS port group in a time slot before this time slot and a time slot after this time slot;
when the DMRS port group is included in one time slot of the multiple time slots, performing channel estimation with a reference signal carried by the DMRS port group in this time slot; or, performing channel estimation with reference signals carried by the DMRS port group in this time slot and a time slot before this time slot; or performing channel estimation with reference signals carried by the DMRS port group in a time slot before this time slot and a time slot after this time slot.

19. The method of any one of claims 10-15, further comprising:
when the first communication party is the base station and the second communication party is the UE, receiving a preset number of bits of Downlink Control Information DCI sent by the first communication party, the DCI indicates a DMRS port corresponding to the reference signal in the DMRS port group; a maximum value corresponding to the preset number of bits is greater than or equal to a maximum number of DMRS ports included in the DMRS port group;
when the second communication party is the base station and the first communication party is the UE, sending a preset number of bits of DCI to the first communication party, the DCI indicates a DMRS port corresponding to the reference signal in the DMRS port group; a maximum value corresponding to the preset number of bits is greater than or equal to a maximum number of DMRS ports included in the DMRS port group.

20. An apparatus for sending a signal, which is applied to a first communication party and comprises:
a determining unit, for determining a De-Modulation Reference Signal DMRS port corresponding to a reference signal that needs to be sent to a second communication party in a DMRS port group, each DMRS port in the DMRS port group occupies one resource element on average;
a sending unit, for sending the reference signal through the DMRS port;
wherein, the first communication party is a base station, and the second communication party is a User Equipment UE, or, the first communication party is a UE, and the second communication party is a base station.

21. The apparatus of claim 20, wherein the number of symbols occupied by the DMRS port group is 1;
each DMRS port included in the DMRS port group occupies one resource element in a frequency division multiplexing manner; or
each Code Division Multiplexing CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

22. The apparatus of claim 21, wherein, the first preset number of resource elements occupied by each CDM group are adjacent; or
the first preset number of resource elements occupied by each CDM group are not adjacent.

23. The apparatus of claim 20, wherein the number of symbols occupied by the DMRS port group is a preset value, which is greater than or equal to 2;
each DMRS port included in the DMRS port group occupies one resource element in a frequency division multiplexing manner; or
each DMRS port included in the DMRS port group occupies one resource element in a time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and the time division multiplexing manner; each CDM group included in the DMRS port group occupies resource elements of the preset value in the frequency division multiplexing manner and a time domain CDM manner with a length of the preset value, each CDM group includes DMRS ports of the preset value; or
each CDM group included in the DMRS port group occupies a second preset number of resource elements in a frequency domain CDM manner with a second preset length and the time domain CDM manner with the length of the preset value, each CDM group includes the second preset number of DMRS ports, wherein a value of the second preset number is greater than or equal to a value of the second preset length, and less than or equal to a value of the second preset length multiplied by the preset value; or
each CDM group included in the DMRS port group occupies a third preset number of resource elements in a frequency domain CDM manner and time division multiplexing manner of a third preset length, and each CDM group includes the third preset number of DMRS ports, and a value of the third preset number is greater than or equal to a value of the third preset length.

24. The apparatus of claim 23, wherein, for a target symbol of all symbols occupied by the DMRS port group, the occupied resource element is offset by a preset offset relative to a starting position of the target symbol, wherein the target symbol is a symbol that has a resource element not occupied by a DMRS port included in the DMRS port group.

25. The apparatus of claim 23, wherein, multiple resource elements occupied by each CDM group on each symbol are adjacent; or
multiple resource elements occupied by each CDM group on each symbol are not adjacent.

26. The apparatus of any one of claims 21-25, wherein, a part of symbols occupied by the DMRS port group are located at a front-loaded symbol position (s), and another part of symbols occupied by the DMRS port group are located at an additional symbol position (s); or
all symbols occupied by the DMRS port group are located at front-loaded symbol positions; or
all symbols occupied by the DMRS port group are located at additional symbol positions.

27. The apparatus of any one of claims 21-25, wherein symbols occupied by the DMRS port group are assigned to one or more time slots;
when the symbols occupied by the DMRS port group are assigned to multiple time slots, the multiple time slots are continuous or discontinuous;
the determination unit is specifically for determining, based on a symbol occupied by the DMRS port group assigned to a current time slot, a DMRS port corresponding to the reference signal that needs to be sent to the second communication party in the DMRS port group in the current time slot.

28. The apparatus of any one of claims 20 to -25, wherein the apparatus further comprises a processing unit for:
when the first communication party is the base station and the second communication party is the UE, sending a preset number of bits of DCI (Downlink Control Information) to the second communication party, the DCI indicates a DMRS port corresponding to the reference signal in the DMRS port group; a maximum value corresponding to the preset number of bits is greater than or equal to a maximum number of DMRS ports included in the DMRS port group;
when the second communication party is the base station and the first communication party is the UE, receiving a preset number of bits of DCI sent by the second communication party, the DCI indicates a DMRS port corresponding to the reference signal in the DMRS port group; a maximum value corresponding to the preset number of bits is greater than or equal to a maximum number of DMRS ports included in the DMRS port group.

29. An apparatus for receiving a signal, which is applied to a second communication party and comprises:
a determining unit, for determining a De-Modulation Reference Signal DMRS port corresponding to a reference signal that needs to be sent by a first communication party in a DMRS port group, each DMRS port in the DMRS port group occupies one resource element on average;
a receiving unit, for receiving the reference signal through the DMRS port;
wherein, the first communication party is a base station, and the second communication party is a User Equipment UE, or, the first communication party is a UE, and the second communication party is a base station.

30. The apparatus of claim 29, wherein the number of symbols occupied by the DMRS port group is 1;
each DMRS port included in the DMRS port group occupies one resource element in a frequency division multiplexing manner; or
each Code Division Multiplexing CDM group included in the DMRS port group occupies a first preset number of resource elements in a frequency domain CDM manner of a first preset length, and each CDM group includes a first preset number of DMRS ports, and a value of the first preset number is the same as a value of the first preset length, and the value of the first preset number is greater than or equal to 2.

31. The apparatus of claim 30, wherein, the first preset number of resource elements occupied by each CDM group are adjacent; or
the first preset number of resource elements occupied by each CDM group are not adjacent.

32. The apparatus of claim 29, wherein the number of symbols occupied by the DMRS port group is a preset value, which is greater than or equal to 2;
each DMRS port included in the DMRS port group occupies one resource element in a frequency division multiplexing manner; or
each DMRS port included in the DMRS port group occupies one resource element in a time division multiplexing manner; or
each DMRS port included in the DMRS port group occupies one resource element in the frequency division multiplexing manner and the time division multiplexing manner; or
each DMRS port included in the DMRS port group except a CDM group occupies one resource element in the frequency division multiplexing manner and the time division multiplexing manner; each CDM group included in the DMRS port group occupies resource elements of the preset value in the frequency division multiplexing manner and a time domain CDM manner with a length of the preset value, each CDM group includes DMRS ports of the preset value; or
each CDM group included in the DMRS port group occupies a second preset number of resource elements in a frequency domain CDM manner with a second preset length and the time domain CDM manner with the length of the preset value, each CDM group includes the second preset number of DMRS ports, wherein a value of the second preset number is greater than or equal to a value of the second preset length, and less than or equal to a value of the second preset length multiplied by the preset value; or
each CDM group included in the DMRS port group occupies a third preset number of resource elements in a frequency domain CDM manner and time division multiplexing manner of a third preset length, and each CDM group includes the third preset number of DMRS ports, and a value of the third preset number is greater than or equal to a value of the third preset length.

33. The apparatus of claim 32, wherein, for a target symbol of all symbols occupied by the DMRS port group, the occupied resource element is offset by a preset offset relative to a starting position of the target symbol, wherein the target symbol is a symbol that has a resource element not occupied by a DMRS port included in the DMRS port group.

34. The apparatus of claim 32, wherein, multiple resource elements occupied by each CDM group on each symbol are adjacent; or
multiple resource elements occupied by each CDM group on each symbol are not adjacent.

35. The apparatus of any one of claims 30-34, wherein, a part of symbols occupied by the DMRS port group are located at a front-loaded symbol position (s), and another part of symbols occupied by the DMRS port group are located at an additional symbol position (s); or
all symbols occupied by the DMRS port group are located at front-loaded symbol positions; or
all symbols occupied by the DMRS port group are located at additional symbol positions.

36. The apparatus of any one of claims 30-34, wherein symbols occupied by the DMRS port group are assigned to one or more time slots;
when the symbols occupied by the DMRS port group are assigned to multiple time slots, the multiple time slots are continuous or discontinuous;
the apparatus further comprises:
an estimation unit, for performing channel estimation with the reference signal carried by the DMRS port group in some or all of the multiple time slots when the symbols occupied by the DMRS port group are assigned to multiple time slots.

37. The apparatus according to claim 36, wherein the estimation unit is specifically for:
when the symbols occupied by the DMRS port group are assigned to multiple time slots, and when the DMRS port group is not included in one time slot of the multiple time slots, performing channel estimation with a reference signal carried by the DMRS port group in a time slot before this time slot; or, performing channel estimation with a reference signal carried by the DMRS port group in a time slot after this time slot; or performing channel estimation with reference signals carried by the DMRS port group in a time slot before this time slot and a time slot after this time slot;
when the DMRS port group is included in one time slot of the multiple time slots, performing channel estimation with a reference signal carried by the DMRS port group in this time slot; or, performing channel estimation with reference signals carried by the DMRS port group in this time slot and a time slot before this time slot; or performing channel estimation with reference signals carried by the DMRS port group in a time slot before this time slot and a time slot after this time slot.

38. The apparatus of any one of claims 29 to -34, wherein the apparatus further comprises a processing unit for:
when the first communication party is the base station and the second communication party is the UE, receiving a preset number of bits of DCI (Downlink Control Information) sent by the first communication party, the DCI indicates a DMRS port corresponding to the reference signal in the DMRS port group; a maximum value corresponding to the preset number of bits is greater than or equal to a maximum number of DMRS ports included in the DMRS port group;
when the second communication party is the base station and the first communication party is the UE, sending a preset number of bits of DCI to the first communication party, the DCI indicates a DMRS port corresponding to the reference signal in the DMRS port group; a maximum value corresponding to the preset number of bits is greater than or equal to a maximum number of DMRS ports included in the DMRS port group.

39. An electronic device, comprising a processor and a machine-readable storage medium, where the machine-readable storage medium stores machine-executable instructions that can be executed by a processor, cause the processor to: implement the method of any one of claims 1-9, or implement the method of any one of claims 10-19.

40. A computer readable storage medium, wherein the computer readable storage medium stores instructions thereon, which when executed by a processor, cause the processor to implement the method of any one of claims 1-9, or implement the method of any one of claims 10-19.

41. A computer program which, when executed by a processor, causes the processor to implement the method of any one of claims 1-9, or implement the method of any one of claims 10-19.
